(19) Europäisches Patentamt
European Patent Office
Office européen des brevets

(11) Publication number: 0 245 938
A2

(12) **EUROPEAN PATENT APPLICATION**

(21) Application number: 87302899.7

(22) Date of filing: 02.04.87

(51) Int. Cl.[4]: C08J 3/24 , C08L 23/02 , C08L 51/06 , C08L 43/04 , C08K 5/00

(30) Priority: 03.04.86 GB 8608119
11.07.86 GB 8617007

(43) Date of publication of application:
19.11.87 Bulletin 87/47

(84) Designated Contracting States:
AT BE CH DE ES FR GB GR IT LI LU NL SE

(71) Applicant: BP Chemicals Limited
Belgrave House 76 Buckingham Palace Road
London, SW1W 0SU(GB)

(72) Inventor: Umpleby, Jeffrey David
144 Library Place
Princeton New Jersey 08540(US)

(74) Representative: Hymers, Ronald Robson et al
BP INTERNATIONAL LIMITED Patents
Division Chertsey Road
Sunbury-on-Thames Middlesex, TW16 7LN(GB)

(54) **Polymer composition.**

(57) A crosslinkable composition suitable for use as insulation for wire and cable comprising a silyl polymer, a filler, a water scavenger selected from an organic ortho-ester, an organic acetal, an organic ketal or a silane and, optionally, a silanol condensation catalyst. A major proportion of the silyl polymer is derived from olefin units. The filled silyl polymer compositions have good storage stability and on extrusion exhibit reduced premature crosslinking.

EP 0 245 938 A2

# POLYMER COMPOSITION

The present invention relates to crosslinkable organic polymer compositions. More particularly the present invention is concerned with crosslinkable compositions comprising organic polymers containing hydrolysable silane groups, which polymers can be thermoformed into shaped articles, for example cable insulation or pipe, and subsequently crosslinked by contacting the articles with water or steam in the presence of a so-called "silanol condensation catalyst".

It is known that organic polymers containing hydrolysable silane groups can be crosslinked by the action of water, preferably in the presence of a silanol condensation catalyst. A number of methods are known for producing such crosslinkable organic polymers. One method comprises copolymerising unsaturated organic monomers, for example, ethylenically-unsaturated or vinyl monomers, with unsaturated silane compounds containing hydrolysable groups. Examples of this method are described in GB-A-2028831 and GB-A-2039513 which disclose the preparation of crosslinkable copolymers of ethylene and an ethylenically unsaturated silane compound by copolymerising the monomers at relatively high temperatures and pressures in the presence of a radical polymerisation initiator. Another example of this copolymerisation method is described in GB-A-1415194 which discloses the preparation of crosslinkable copolymer by contacting ethylene and a terminally unsaturated silane compound, optionally with other olefinically unsaturated comonomer, with certain defined Ziegler catalysts under polymerisation conditions which preferably employ relatively low temperatures and pressures.

It is also well-known that polymers crosslinkable by the action of water and a silanol condensation catalyst can be prepared by grafting an unsaturated silane compound on to a preformed polymeric material. Grafting processes of this type can be carried out by heating together a base polymer, for example polyethylene, an unsaturated silane compound bearing one or more hydrolysable groups, a grafting initiator and optionally a silanol condensation catalyst, under conditions such that the unsaturated silane compound is grafted on to the base polymer. Examples of this method are disclosed in GB-A-1357549, GB-A-1234034 and GB-A-1286460. Examples of commercial processes which employ a grafting reaction of this type are the SIOPLAS (RTM) and the MONOSIL (RTM) processes. In the SIOPLAS process, the base polymer is heated with the unsaturated silane in the presence of a grafting initiator and the product is extruded and pelleted to produce a pelleted silane-grafted thermoplastic polymer. The pelleted polymer can then be fed with a silanol condensation catalyst to a thermoforming process for fabricating shaped products. These shaped products are then crosslinked by exposure to water or steam. In the MONOSIL process, the base polymer, the unsaturated silane, the grafting catalyst and the silanol condensation catalyst are fed simultaneously to a special extruder in which grafting occurs "in situ" and crosslinkable products, eg cable or pipe, are directly extruded. These products can be crosslinked by exposure to steam or water under the influence of the silanol condensation catalyst.

Other known methods for forming polymeric materials having hydrolysable silane groups include "transesterification" methods wherein a copolymer having exchangeable functions such as alkoxy groups (as, for example, in ethylene/ethyl acrylate copolymer) or carboxylate groups (as, for example, in ethylene/vinyl acetate copolymer) is treated with a suitable silane compound in the presence of a special ester-exchange catalyst.

In this method, for example, the alkoxy groups present in an ethylene/alkyl(meth)acrylate copolymer can be "ester exchanged" or replaced by a silane substituent bearing hydrolysable groups by reacting the copolymer with a suitable silane compound in the presence of a catalyst (for example, titanium tetraisopropylate). Examples of suitable silane compounds are acetoxy propyl trimethoxy silane, acetoxy propyl triethoxy silane, methacryloxypropyl trimethoxy silane, acryloxypropyl trimethoxy silane, methacryloxypropyl triethoxysilane and acryloxypropyl triethoxy silane. In another example of the transesterification method ethylene/vinyl acetate copolymer can be reacted with a suitable silane compound bearing hydrolysable groups and having esterified carboxylic acid groups which exchange with the acetate groups on the copolymer. A suitable silane compound is 4-[tri(m)ethoxysilyl] butanoic acid (m)ethyl ester.

Crosslinkable organic polymers having hydrolysable silane groups (hereinafter referred to as "silyl polymers") can be fabricated to form a large variety of useful articles by conventional techniques, for example, extrusion, injection moulding, blow-moulding and film-blowing processes. The crosslinking step is generally carried out subsequent to fabrication of the article because the crosslinked polymer cannot in general be satisfactorily thermoformed.

A problem encountered with silyl polymers is that during thermoforming operations the polymer can undergo premature crosslinking which can lead to difficulties in the fabrication of articles from the polymer or to the production of articles having unsatisfactory physical and mechanical properties.

The problem is particularly serious in the production of wire and cable insulation which should be well crosslinked, have good mechanical properties and low shrinkage. The insulation should also have a smooth surface since surface roughness can lead to electrical stress and insulation breakdown. The problems associated with premature crosslinking are particularly apparent when silyl polymer compositions contain fillers especially fillers which are hygroscopic or contain water. Thus, commercially available silyl polymer compounds sold for use as wire or cable insulation generally do not contain filler. Water associated with fillers can also affect the storage life of silyl polymer compositions.

It is an object of the present invention to provide an improved composition comprising a filled crosslinkable silyl polymer. It is a further object of the present invention to provide a a filled crosslinkable silyl polymer composition which exhibits a reduced tendency to undergo premature crosslinking during the fabrication of articles therefrom.

Accordingly, one aspect of the present invention provides a composition capable of being crosslinked by the action of water, optionally in the presence of a silanol condensation catalyst, the composition comprising

(A) a silyl polymer substantially comprising polymerised olefin units,

(B) at least 2% by weight of filler, based on the total weight of the composition, and

C) as a water scavenger, one or more compounds selected from an organic ortho-ester, an organic acetal, an organic ketal and a silane, with the proviso that if the water scavenger is a silane it has the general formula:

$R_9\ R_{10}\ R_{11}\text{-Si--}[OSiR_{12}R_{13}]_m\text{-}R_{14}$

wherein $R_9$, $R_{10}$, $R_{11}$, $R_{12}$, $R_{13}$ and $R_{14}$ are the same or different groups selected from hydrogen, hydrocarbyl and oxyhydrocarbyl, m is zero or an integer from 1 to 10, not more than one R group per silicon atom being hydrogen.

A further aspect of the present invention provides a composition capable of being crosslinked by the action of water comprising

(A) a silyl polymer substantially comprising polymerised olefin units

(B) at least 2% by weight of filler, based on the total weight of the composition,

(C) as a water scavenger, one or more compounds selected from an organic ortho-ester, an organic acetal, an organic ketal and a silane, with the proviso that if the water scavenger is a silane it has the general formula:

$R_9\ R_{10}\ R_{11}\text{-Si--}[OSiR_{12}R_{13}]_m\text{-}R_{14}$

wherein $R_9$, $R_{10}$, $R_{11}$, $R_{12}$, $R_{13}$ and $R_{14}$ are the same or different groups selected from hydrogen, hydrocarbyl and oxyhydrocarbyl, m is zero or an integer from 1 to 10, not more than one R group per silicon atom being hydrogen and

(D) a silanol condensation catalyst.

The silyl polymer employed in the composition of the present invention is suitably any organic polymer substantially comprising polymerised olefin units which contains hydrolysable silane groups and which is crosslinkable by the action of water in the presence of a silanol condensation catalyst. Examples of such silyl polymers and references to their methods of manufacture are described above. Preferably, the silyl polymer comprises a major amount of ethylene units. Most preferably, at least 70% of the silyl polymer is derived from ethylene units. Preferred silyl polymers are those prepared by copolymerising ethylene and an unsaturated silane compound having one or more hydrolysable groups, preferably in the presence of a free radical initiator and optionally together with one or more other unsaturated compounds, at a temperature of 150 to 400°C and a pressure of 1000 to 4000 bar in the presence of a free radical polymerisation initiator. The unsaturated silane compound employed in such processes is preferably a compound having the general formula $XSiX^1{}_nY_{3-n}$ wherein X represents an ethylenically unsaturated hydrocarbyl or hydrocarbyloxy group; $X^1$ represents an aliphatic saturated hydrocarbyl group; Y represents a hydrolysable organic group; and n represents zero, 1 or 2. X can be, for example, vinyl, allyl, isopropenyl, butenyl, cyclohexenyl or gamma-methacryloxypropyl. Y can be, for example, methoxy, ethoxy, formyloxy, acetoxy, propionyloxy, alkylamino or arylamino. $X^1$ can be, for example, methyl, ethyl, propyl, hexyl, octyl, decyl or phenyl. X is preferably a vinyl group, Y is preferably methoxy, ethoxy or acetoxy. Preferred unsaturated silane compounds are vinyl trimethoxy silane, vinyl triethoxy silane and vinyl triacetoxy silane.

The silyl polymer suitably contains 0.1-10 weight %, preferably 0.5 to 5 weight % of copolymerised or grafted units of the unsaturated silane compound (based on silyl polymer).

The compositions according to the present invention contain a filler which can be one or more of the fillers conventionally used in polyolefin compositions. For example, the filler can be a particulate material included in the composition to provide: reinforcement e.g. calcium carbonate; flame retardancy e.g. metal hydroxides; ultra violet light stability e.g. carbon black; electrical conductivity e.g. electrically conductive

carbon black or electrical property modification e.g. titanium dioxide. The filler is present in an amount of at least 2% by weight. The amount used will depend on the filler and the properties required. Typically the amount of a filler such as aluminium trihydrate will be from 35 to 65% by weight based on the total weight of the composition.

The water scavenger employed in the composition of the present invention is suitably one or more organic compounds selected from ortho esters, acetals, ketals or the defined silane.

Exemplary of ortho esters suitable for use in the composition of the present invention are compounds having the general formula $RC(OR^1)_3$ wherein R is hydrogen or an organic group, preferably hydrogen, methyl or ethyl, and $R^1$ is an organic group, preferably an alkyl or aromatic group, most preferably an alkyl group containing from 1 to 12 carbon atoms. Particularly preferred are the ortho esters $RC(OR^1)_3$ wherein R is hydrogen or methyl and $R^1$ is an alkyl group containing 1 to 4 carbon atoms, for example methyl, ethyl, n-propyl or n-butyl. Examples of ortho esters suitable for use in the composition of the present invention are trimethyl orthoformate, triethyl orthoformate, triethyl orthoacetate, tributyl orthoformate, tributyl orthoacetate and triethyl orthopropionate.

Acetals and ketals suitable for use in the present invention can be non-cyclic acetals and ketals represented by the general formula

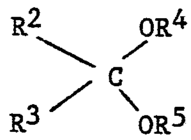

or cyclic acetals and ketals represented by the general formula

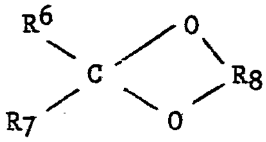

In the case that the water scavenger is a non-cyclic or cyclic acetal $R^2$ and $R^6$ are hydrogen, $R^3$ and $R^7$ are hydrocarbyl groups, preferably alkyl groups containing 1-6 carbon atoms; $R^4$, $R^5$ can be in the same or different hydrocarbyl groups, preferably $C_1$ to $C_{12}$ alkyl, and $R^8$ is $(CH_2)_n$ wherein n is from 1 to 4.

Examples of suitable acetals are 1,1-dimethoxy ethane; 1,1-diethoxyethane; 1,1-dibutoxyethane and 1,1-dimethoxypropane; or the cyclic acetal, 2-methyl-1,3-dioxolane.

In the case that the water scavenger is a non-cyclic or cyclic ketal, $R^2$, $R^3$, $R^6$ and $R^7$ are suitably hydrocarbyl groups, preferably, alkyl groups containing 1-6 carbon atoms and $R^4$, $R^5$ and $R^8$ are suitably as designated above. Examples of suitable ketals are 2,2-dimethoxypropane; 2,2-diethyoxypropane and 2,2-dimethoxybutane; or the cyclic ketal 2,2-dimethyl-1,3-dioxolane.

In the case that the water scavenger is the defined silane, preferably at least one of the groups $R_9$ through $R_{14}$ is an alkoxyl group, for example methoxy, ethoxy, n-propoxy or n-butoxy. Methoxy groups are preferred. Examples of suitable silanes are bismethoxy dimethyl siloxane and octyl trimethoxy silane.

The water scavenger employed in the present invention is preferably an alkyl orthoformate.

The quantity of the water scavenger employed in the composition of the present invention is preferably at least sufficient to react with any traces of water present in the starting components of the composition and with any moisture which enters the composition during storage, handling or processing, up to the time that the composition is crosslinked by deliberate water treatment. Provided that reasonable precautions are taken to avoid contamination by moisture of the starting materials and the composition produced therefrom, relatively small quantities of the water scavenger can be employed, for example quantities in the range 0.001 to 1 moles, preferably 0.005 to 0.05 moles of water scavenger per kilogramme of the composition.

Particular combinations of the water scavenger with other components which form useful "precursor" to the compositions of the present invention can comprise, for example;

1. A blend of the water scavenger with a silanol condensation catalyst.

2. A blend of the water scavenger with a peroxide catalyst for grafting.

3. A blend of the water scavenger with an unsaturated silane compound, optionally together with a peroxide catalyst for grafting.

4. A blend of the water scavenger with a hydrolysable unsaturated silane compound, a peroxide grafting catalyst and a silanol condensation catalyst.

The precursor (1) can be used for example for the direct introduction of the water scavenger and silanol condensation catalyst into a mixture of an ethylene/unsaturated silane copolymer and filler or into a mixture of a graft polymer of polyethylene with an unsaturated silane and filler. The precursors (2) and (3) can be used, for example, in the manufacture of compositions comprising a graft polymer of polyethylene and an unsaturated silane and filler. The precursor (4) can be used, for example, for the direct production of crosslinkable articles based on graph polymer of polyethylene/unsaturated silane using for example extrusion apparatus of the type described in GB-A-1526398 (BICC Limited and Etablissements Maillefer SA).

The silanol condensation catalyst can be present in the composition of the present invention or can be employed by application direct to articles formed from the composition of the present invention. It is preferred to include the silanol condensation catalyst in the composition.

Any of the silanol condensation catalysts known in the art for crosslinking silyl polymers can be suitably employed in the present invention. Examples of suitable classes of silanol condensation catalysts are organic and inorganic acids and alkalis, and metal compounds, for example complexes or carboxylates of lead, cobalt, iron, nickel, zinc and tin. Specific examples of the silanol condensation catalyst are dibutyl tin maleate, dibutyl tin dilaurate, dibutyl tin diacetate, dibutyl tin dioctoate, stannous acetate, stannous caprylate, lead naphthenate, zinc caprylate, cobalt naphthenate; ethylamines, dibutylamine, hexylamines, pyridine; inorganic acids such as sulfuric acid and hydrochloric acid; and organic acids such as toluenesulfonic acid, acetic acid, stearic acid and maleic acid. Carboxylates of tin are preferred. Particularly preferred silanol condensation catalysts are dialkyl tin carboxylates, for example dibutyl tin dilaurate, dibutyl tin dipalmitate, dibutyl tin distearate, dioctyl tin dilaurate and dibutyl tin maleate.

The quantity of silanol condensation catalyst employed in the crosslinkable composition of the present invention or applied direct to articles formed from the composition is suitably in the range 0.001 to 3.0 moles, preferably in the range 0.003 to 0.05 moles per mole of silyl units in the silyl polymer.

Generally speaking, the quantity of the silanol condensation catalyst is in the range of 0.001 to 10% by weight, preferably 0.01 and 5% by weight, most preferably 0.03 to 3% by weight, relative to the quantity of silyl polymer in the composition.

The composition of the present invention comprising the silyl polymer, filler and the water scavenger, optionally with a silanol condensation catalyst and/or any other ingredients of the composition, can be prepared by a variety of techniques including, for example, direct blending or compounding of the ingredients, the use of masterbatch techniques or by forming the silyl polymer "in situ" in the presence of the water scavenger, the filler being present in the "in situ" formation of the silyl polymer or compounded afterwards.

The composition can be prepared, for example, by compounding the silyl polymer with the filler to produce a granular compound e.g. powder or pellets. This compound can then be contacted with the water scavenger under conditions such that the water scavenger is absorbed by the compound granules. If desired, other additives, such as, for example, the silanol condensation catalyst and/or antioxidant can be incorporated into the compound or can be absorbed into the compound granules using a soaking technique. Thus, if desired, the granules of the compounded silyl polymer and filler can be tumbled with a mixture of water scavenger, silanol condensation catalyst and antioxidant until absorption of the ingredients is substantially complete. The rate of absorption can be increased by the use of elevated temperatures and/or intensive mixing, if desired.

In another method of making the composition of the present invention, the silyl polymer can be melted in the presence of the filler and water scavenger and optionally in the presence of any other desired ingredients. Such melting is preferably carried out in an extruder or in proprietary compounding apparatus, e.g. a Banbury mixer.

In a further method of making the composition of the present invention, the water scavenger and optionally any other ingredients which it is desired to incorporate in the composition, can be included in a masterbatch, prior to compounding the masterbatch with the silyl polymer and filler or with the filler and components which react together to form the silyl polymer "in situ". Optionally, the filler can be included in the composition after the "in situ" formation of the silyl polymer.

In the case that the silyl polymer is prepared by grafting the unsaturated silane on to a base polymer, for example low density polyethylene, linear low density polyethylene, ethylene/ethyl acrylate copolymer or ethylene/vinyl acetate copolymer, the water scavenger can for example be incorporated into the base polymer prior to or during the performance of the grafting reaction.

A crosslinkable composition according to the present invention comprising the silyl polymer, the filler, the water scavenger, the silanol condensation catalyst and, optionally other ingredients, can for example be prepared directly in the form of crosslinkable finished articles by extruding a base polymer, e.g. polyethylene, together with the water scavenger, the filler, an unsaturated silane compound of the type described earlier in this specification, a free radical catalyst, i.e. initiator for grafting (e.g. an organic peroxide) and a silanol condensation catalyst. This method can be applied for example in the well-known MONOSIL (RTM) process for the production of insulated wire and cable.

The filler can, if desired, be treated with the water scavenger compound prior to their incorporation in the composition of the present invention. For example, a flame retardant composition in accordance with the present invention can be made by treating aluminium trihydrate with the water scavenger, and then blending the product with the silyl polymer and any other desired ingredients of the composition.

The composition of the present invention can contain additives conventionally employed in the art. Examples of such additives are antioxidants, metal deactivators (e.g. salicylaldehyde oxime), lubricants, water-tree inhibitors, foaming agents, and pigments. Additives of this type are conventionally incorporated into the composition either directly or by a masterbatching technique. The composition can also be blended with other compatible polymeric materials, for examp,e, polyethylene, polypropylene, ethylene/ethyl acrylate copolymer and ethylene/1-olefin copolymer (e.g. LLDPE).

The composition of the present invention can be used to manufacture crosslinked products using the technology known for the manufacture of articles from conventional silyl polymers. For example, the composition can be used in blow-moulding, injection-moulding, film-blowing, calendering, extrusion, roto-moulding and extrusion-coating techniques. The composition is particularly preferred for wire and cable coating applications. The composition has good storage stability. Wire and cable insulation produced by extrusion coating using the composition of the present invention exhibits reduced premature crosslinking. Articles fabricated from the composition of the present invention can be readily crosslinked by exposure to water, steam or moist air with the aid of a silanol condensation catalyst and, in general, relatively fast rates of cure are obtained.

The invention is illustrated by the following examples.

Examples 1 and 2

The following components were compounded and pelleted to form Compound A and Compound B

| Component | Parts by weight | |
|---|---|---|
| | Compound A | Compound B |
| Ethylene/vinyltrimethoxy silane copolymer | 33.82 | 19.32 |
| Triethyl orthoformate | 1.45 | 1.45 |
| Ethylene/vinyl acetate copolymer | 24.15 | 28.99 |
| Aluminium trihydrate | 38.65 | 48.31 |
| Process wax | 1.93 | 1.93 |

The aluminium-trihydrate filler used was a stearic acid coated aluminium trihydrate sold under the trade designation MARTINAL 104C by Martinswerke. (MARTINAL is a trademark). The ethylene/vinyl acetate copolymer contained 28 weight per cent vinyl acetate units. The ethylene/vinyl trimethoxy silane copolymer was prepared by copolymerising ethylene and vinyl trimethoxy silane at high pressure and high temperature using a method similar to that disclosed in GB-A-202831. The copolymer contained approximately 1.5% by weight of units of copolymerised vinyl trimethoxy silane.

Compound A and Compound B were stored in 25 litre polyethylene sacks under ambient conditions in a warehouse. After being stored for three months, each compound was mixed with a catalyst masterbatch and extruded about a copper conductor to form wire.

The catalyst masterbatch comprised 0.75% by weight of dibutyl tin maleate, 88.75% by weight of an ethylene/ethyl acrylate copolymer containing approximately 20% by weight of ethyl acrylate units, 0.5% by weight of a fluoroelastomer, 1.5% by weight of a processing aid, 2% by weight of a phosphite stabiliser, 1.5% by weight of a metal deactivator and 5% by weight of antioxidant .

In Example 1, Compound A was mixed with 4% by weight of the catalyst masterbatch. In Example 2, Compound B was mixed with 2% by weight of the catalyst masterbatch. A 63mm Francis Shaw extruder fitted with a conventional pin mixing screw was used to produce insulated wire using the compositions of Example 1 and Example 2. The copper conductor was 0.6mm in diameter and the thickness of the insulation was 0.8mm. For each composition the extruder was run at a temperature of 120°C in all zones. The line speed and screw speed used in each Example are given in Table 1. Samples of the wires were crosslinked by placing them in water at 80°C for 4 hours. The heat elongation, tensile strength and elongation of the crosslinked insulation were determined using standard test methods. These physical properties are given in Table 1.

The wire produced in each Example had a smooth surface and the physical properties were good even after the 3 month storage of Compound A and Compound B.

Table 1

| | | Example 1 | Example 2 |
|---|---|---|---|
| Physical Properties | | | |
| Heat Elongation ($200°C/20N/cm^2/15mins$) (IEC 540) | (%) | 70 | 115 |
| Tensile Strength (ISO R527) | (MPa) | 10.1 | 7.8 |
| Elongation (ISO R527) | (%) | 325 | 380 |
| Process Condition | | | |
| Line Speed | (m/min) | 100 | 200 |
| Screw Speed | r.p.m. | 40 | 64 |

**Claims**

**1.** A composition capable of being crosslinked by the action of water, optionally in the presence of a silanol condensation catalyst, the composition comprising

(A) a silyl polymer substantially comprising polymerised olefin units

(B) at least 2% by weight of filler, based on the total weight of the composition, and

(C) as a water scavenger, one or more compounds selected from an organic ortho-ester, an organic acetal, an organic ketal and a silane, with the proviso that if the water scavenger is a silane it has the general formula:

$R_9\ R_{10}\ R_{11}\text{-Si--}[OSiR_{12}R_{13}]_m\text{-}R_{14}$

wherein $R_9$, $R_{10}$, $R_{11}$, $R_{12}$, $R_{13}$ and $R_{14}$ are the same or different groups selected from hydrogen, hydrocarbyl and oxyhydrocarbyl, m is zero or an integer from 1 to 10, not more than one R group per silicon atom being hydrogen.

**2.** A composition capable of being crosslinked by the action of water comprising

(A) a silyl polymer substantially comprising polymerised olefin units

(B) at least 2% by weight of filler, based on the total weight of the composition

(C) as a water scavenger, one or more compounds selected from an organic ortho-ester, an organic acetal, an organic ketal and a silane, with the proviso that if the water scavenger is a silane it has the general formula:

$R_9\ R_{10}\ R_{11}$-Si--$[OSiR_{12}R_{13}]_m$-$R_{14}$

wherein $R_9$, $R_{10}$, $R_{11}$, $R_{12}$, $R_{13}$ and $R_{14}$ are the same or different groups selected from hydrogen, hydrocarbyl and oxyhydrocarbyl, m is zero or an integer from 1 to 10, not more than one R group per silicon atom being hydrogen and

(D) a silanol condensation catalyst.

**3.** A composition as claimed in claim 1 or 2 wherein the silyl polymer is prepared by copolymerising ethylene and an unsaturated silane compound having one or more hydrolysable groups in the presence of a free radical initiator.

**4.** A composition as claimed in claim 1 or 2 wherein the silyl polymer is prepared by grafting an unsaturated silane on to a base polymer in the presence of a grafting initiator.

**5.** A composition as claimed in claim 3 or 4 wherein the unsaturated silane is vinyl trimethoxy silane, vinyl triethoxy silane or vinyl triacetoxysilane.

**6.** A composition as claimed in any one of the preceding claims wherein the water scavenger comprises an orthoester selected from trimethyl orthoformate, triethyl orthoformate, triethyl orthoacetate, tributyl orthoformate, tributyl orthoacetate and triethyl orthopropionate.

**7.** A composition as claimed in any one of the preceding claims wherein the water scavenger comprises an acetal selected from 1,1-dimethoxy ethane; 1,1-diethoxyethane; 1,1-dibutoxyethane and 1,1-dimethoxypropane; or the cyclic acetal, 2-methyll-1,3-dioxolane.

**8.** A composition as claimed in any one of the preceding claims wherein the water scavenger comprises a ketal selected from 2,2-dimethoxypropane; 2,2-diethoxypropane and 2,2-dimethoxybutane; or the cyclic ketal 2,2-dimethyl-1,3-dioxolane.

**9.** A composition as claimed in any one of the preceding claims wherein the water scavenger comprises a silane selected from bismethoxy dimethylsiloxane and octyltrimethoxysilane.

**10.** A composition as claimed in any one of the preceding claims wherein the quantity of water scavenger employed is in the range 0.005 to 0.05 moles per kilogramme of the composition.

**11.** A composition as claimed in any one of the preceding claims in which the filler is selected from calcium carbonate, carbon black and titanium dioxide.

**12.** A composition as claimed in any one of claims 1 to 10 in which the filler is a metal hydroxide.

**13.**A composition as claimed in claim 12 in which the filler is aluminium trihydrate.

**14.** A process for producing a composition capable of being crosslinked by the action of water comprises compounding together;

(A) a silyl polymer substantially comprising polymerised olefin units

(B) at least 2% by weight of filler, based on the total weight of the composition, and

(C) as a water scavenger, one or more compounds selected from an organic ortho-ester, an organic acetal, an organic ketal and a silane, with the proviso that if the water scavenger is a silane it has the general formula:

$R_9\ R_{10}\ R_{11}$-Si--$[OSiR_{12}R_{13}]_m$-$R_{14}$

and optionally a silanol condensation catalyst.

**15.** A process as claimed in claim 14 in which the filler is treated with the water scavanger prior to incorporation into the composition.

**16.** Crosslinked or uncrosslinked articles fabricated from the composition claimed in any one of claims 1-13.